# EUROPÄISCHE PATENTSCHRIFT

(11) **EP 3 170 163 B1**
(45) Veröffentlichungstag und Bekanntmachung des Hinweises auf die Patenterteilung: **12.06.2019**
(21) Anmeldenummer: 16706133.2
(22) Anmeldetag: 12.02.2016
(51) Int. Cl.: G08G 1/00, G08G 1/14, G05D 1/02, B62D 15/02, E04H 6/42

(54) **VERFAHREN ZUR VERKEHRSKOORDINIERUNG VON KRAFTFAHRZEUGEN IN EINER PARKUMGEBUNG**
METHOD FOR TRAFFIC COORDINATION OF MOTOR VEHICLES IN A PARKING ENVIRONMENT
PROCÉDÉ DE COORDINATION DE CIRCULATION DE VÉHICULES AUTOMOBILES DANS UN ENVIRONNEMENT DE STATIONNEMENT

(30) Priorität: 24.02.2015 DE 102015002405
(43) Veröffentlichungstag der Anmeldung: 24.05.2017
(73) Patentinhaber: Audi AG, 85045 Ingolstadt (DE)
(72) Erfinder: ALTINGER, Harald, 85049 Gerolfing (DE); SCHULLER, Florian, 85737 Ismaning (DE)
(86) Internationale Anmeldenummer: PCT/EP2016/000244
(87) Internationale Veröffentlichungsnummer: WO 2016/134827

(56) Entgegenhaltungen:
- DE-A1-102012 015 968
- DE-A1-102012 021 282
- DE-A1-102012 222 562
- KYOUNGHWAN AN ET AL: "Cooperative vehicle control system based on fusion map", COMPUTING AND CONVERGENCE TECHNOLOGY (ICCCT), 2012 7TH INTERNATIONAL CONFERENCE ON, IEEE, 3. Dezember 2012 (2012-12-03), Seiten 94-97, XP032421998, ISBN: 978-1-4673-0894-6
- JULIAN TIMPNER ET AL: "A back-end system for an autonomous parking and charging system for electric vehicles", ELECTRIC VEHICLE CONFERENCE (IEVC), 2012 IEEE INTERNATIONAL, IEEE, 4. März 2012 (2012-03-04), Seiten 1-8, XP032166656, DOI: 10.1109/IEVC.2012.6183267 ISBN: 978-1-4673-1562-3

## Beschreibung

Die Erfindung betrifft ein Verfahren zur Verkehrskoordinierung von Kraftfahrzeugen in einer Parkumgebung, wobei der Parkumgebung eine zentrale Recheneinrichtung, insbesondere ein Server, und an die zentrale Recheneinrichtung Sensordaten liefernde, die Parkumgebung überwachende Sensoren zugeordnet sind und auf der zentralen Recheneinrichtung ein Kartendatensatz der Parkumgebung abgelegt ist. Daneben betrifft die Erfindung eine derartige zentrale Recheneinrichtung einer Parkumgebung.

Parkumgebungen für Kraftfahrzeuge sind insbesondere als Parkhäuser und mehrere Abstellplätze für Kraftfahrzeuge aufweisende Parkplätze bekannt. In der Vergangenheit wurde der Wunsch immer lauter, die Navigation in solchen Parkumgebungen verbessern zu können. So wurden beispielsweise Systeme vorgeschlagen, in denen ein Kraftfahrzeug automatisch einem Abstellplatz innerhalb des Parkhauses zugeordnet werden soll, wobei zu diesem Zweck an den Parkplätzen entsprechende Sensoren angeordnet werden, über die festgestellt werden kann, ob ein Parkplatz belegt ist oder nicht. Weitere Vorschläge sehen vor, dass über eine zentrale Recheneinrichtung der Parkumgebung, mit der das Kraftfahrzeug über Kraftfahrzeug-zu-Infrastruktur-Kommunikation eine Kommunikationsverbindung aufbaut, beispielsweise eine WLAN-Verbindung oder eine GSM-Verbindung, ein Kartendatensatz der Parkumgebung an das Kraftfahrzeug übermittelt wird, welcher in einem Navigationssystem des Kraftfahrzeugs benutzt werden kann, um den Fahrer durch die Parkumgebung zu dem Parkplatz hinzuführen. Aufgrund der Angabe des Zielabstellplatzes berechnet das kraftfahrzeuginterne Navigationssystem unter Verwendung des Kartendatensatzes also einen Weg, der das Kraftfahrzeug zu dem Zielabstellplatz führt, wobei der Zielabstellplatz gemeinsam mit dem Kartendatensatz übermittelt werden kann.

Die Ermittlung solcher Kartendatensätze durch Messungen, aus Bauplänen und/oder wenigstens teilweise manuell ist im Stand der Technik bereits bekannt. Um diesbezüglich Verbesserungen herbeizuführen, wurde vorgeschlagen, weitere Sensoren innerhalb der Parkumgebung vorzusehen, die neu hinzukommende bzw. wegfallende Hindernisse erfassen und entsprechend in den Kartendatensatz eintragen können, so dass dieser dynamisch aktuell gehalten werden kann. So kann auch auf dynamisch auftretende Veränderungen in der Befahrbarkeit der Parkumgebung reagiert werden. In diesem Kontext wurde auch vorgeschlagen, Sensordaten oder allgemein Umgebungsdaten der in der Parkumgebung betriebenen Kraftfahrzeuge oder auch der in der Parkumgebung abgestellten Kraftfahrzeuge einzusetzen, um den Kartendatensatz zu aktualisieren und somit immer die ideale Grundlage für die Pfadplanung in den Kraftfahrzeugen bereitzustellen.

Berechnet aktuell jedes Kraftfahrzeug für sich einen zu einem Zielabstellplatz zurückzulegenden Weg, kann es dabei andere in der Parkumgebung betriebene Kraftfahrzeuge nur innerhalb der eigenen Umgebungserfassungsmöglichkeiten berücksichtigten, was zu Behinderungen, Zeitverzögerungen oder gar der Unmöglichkeit weiteren Vorankommens führen kann. Besonders kritisch ist dies im Hinblick auf vollautomatisierte Parkvorgänge innerhalb der Parkumgebung, bei denen beispielsweise zur vollständig automatischen Führung des Kraftfahrzeugs ausgebildete Fahrzeugsysteme genutzt werden können, denen jedoch auch nur eingeschränkt Informationen über die Verkehrslage in der Parkumgebung zur Verfügung stehen.

Der Artikel "Cooperative Vehicle Control System based on Fusion Map" von Kyounghwan An und Wooyong Han, 2012 International Conference on Computing and Convergence Technology (ICCCT), IEEE, Seiten 94-97 (2012), betrifft die kooperative Steuerung von Kraftfahrzeugen, auch in Parkumgebungen, denen als "Mission" Anweisungen übermittelt werden, um zu einem Zielort zu gelangen. Zur Ermittlung der Missionen greift ein zentraler "Global Vehicle Control Server" unter anderem auf Sensordaten ortsfester Sensoren zu. Die Missionen umfassen über Wegpunkte definierte Teilabschnitte mit jeweiligen Anweisungen, denen "Temporal Constraints" zugeordnet sind.

Der Erfindung liegt daher die Aufgabe zugrunde, eine Möglichkeit zur verbesserten, koordinierten Navigation von Kraftfahrzeugen in Parkumgebungen anzugeben.

Zur Lösung dieser Aufgabe sind bei einem Verfahren der eingangs genannten Art erfindungsgemäß die Merkmale des Anspruchs 1 vorgesehen. Dabei ist die zentrale Recheneinrichtung zur räumlichen und zeitlichen Koordination des Verkehrs in der Parkumgebung ausgebildet, indem durch Überwachung unter Auswertung wenigstens der Sensordaten aktuelle, die Position von innerhalb der Parkumgebung betriebenen Kraftfahrzeugen umfassende Verkehrslagedaten der Parkumgebung ermittelt werden und für die in der Parkumgebung betriebenen Kraftfahrzeuge jeweils unter Berücksichtigung der Verkehrslagedaten, des Kartendatensatzes sowie von für andere Kraftfahrzeuge ermittelten räumlichen und zeitlichen Sollkorridoren als Eingangsdaten einen räumlichen und zeitlichen Sollkorridor zu einem Zielort des Kraftfahrzeugs ermittelt und an das jeweilige Kraftfahrzeug übermittelt wird.

Es wird also, wie grundsätzlich bekannt, eine zentrale Recheneinrichtung in der Parkumgebung genutzt, die Kartendaten der Parkumgebung, insbesondere eines Parkhauses, zur Verfügung stellen kann und insbesondere auch dynamisch aktualisieren kann. Ferner kann diese zentrale Recheneinrichtung, wie grundsätzlich bekannt, mit innerhalb der Parkumgebung betriebenen Kraftfahrzeugen kommunizieren. Bezüglich des Kartendatensatzes sei noch angemerkt, dass die genannte, auch im Rahmen der vorliegenden Erfindung mögliche dynamische Aktualisierung des Kartendatensatzes auch die Zuordnung aktueller Metadaten zu dem Kartendatensatz umfassen kann, die beispielsweise Hindernisse, falsch parkende Kraftfahrzeuge und dergleichen beschreiben können.

Erfindungsgemäß wird nun zum einen vorgeschlagen, die Sensordaten der in der Parkumgebung vorgesehenen Sensoren zu nutzen, um auch die Positionen der in der Parkumgebung betriebenen Kraftfahrzeuge nachverfolgen zu können, mithin Verkehrslagedaten innerhalb der Parkumgebung zu ermitteln, die auch eine explizite Nachverfolgung der in der Parkumgebung betriebenen Kraftfahrzeuge enthalten können, mithin eine Beschreibung von Bewegungen von Kraftfahrzeugen und dergleichen. Gemeinsam mit dem Kartendatensatz können diese Verkehrslagedaten genutzt werden, um zeitliche und räumliche Vorgaben für konkret im Kraftfahrzeug zu ermittelnde und durch dieses zu befahrene Trajektorien beschreibende Sollkorridore für die in der Parkumgebung betriebenen Kraftfahrzeuge zu ermitteln, die angeben, innerhalb welcher Grenzen das Kraftfahrzeug ideal über eine konkrete Trajektorie zu einem Zielabstellplatz bzw. von dem aktuellen Abstellplatz zu einer Ausfahrt der Parkumgebung gelangen kann. Dabei nutzt das Verfahren mit besonderem Vorteil aus, dass die entsprechenden Wegplanungen zentral erfolgen, mithin die Ermittlung der Sollkorridore für ein bestimmtes Kraftfahrzeug von den Sollkorridoren der anderen Kraftfahrzeuge, die beispielsweise früher in Betrieb genommen wurden bzw. früher das Parkumgebung eingefahren sind, abhängig durchgeführt werden kann, so dass letztlich ein koordinierter Verkehrsablauf, insbesondere auch im Sinne einer sektorweisen Freigabe, innerhalb der Parkumgebung realisierbar ist, bei dem sich die einzelnen Kraftfahrzeuge aufeinander abgestimmt bewegen, insbesondere auch in zeitlicher Hinsicht, so dass nicht nur konfliktierende Wegabschnitte vermieden werden können, sondern auch Wartezeiten, die beispielsweise vom Rangieren eines anderen Kraftfahrzeugs herrühren können, minimiert werden können.

Zusammenfassend wirkt die zentrale Recheneinrichtung also als ein zentrales Infrastruktursteuergerät für Parkumgebungen, insbesondere Parkhäuser, durch das unter Berücksichtigung des aktuellen Verkehrsaufkommens innerhalb der Parkumgebung koordinierte, zeitlich und/oder räumlich optimierte Wege bis zu den Abstellplätzen bzw. zu einer Ausfahrt ermittelt werden können, die anhand von Vorgabekorridoren, den Sollkorridoren, den Kraftfahrzeuge Grenzen auferlegen, innerhalb derer die konkrete Bewegung stattzufinden hat. Die Sensorik der Parkumgebung wird mithin genutzt, um Entscheidungsgrundlagen für die zentrale Fahrwegwahl für die einzelnen Kraftfahrzeuge zu geben, wobei die Ermittlung von Sollkorridoren koordiniert erfolgt Details, beispielsweise die konkrete Trajektorie innerhalb einzelner Wegabschnitte/Sektoren, insbesondere das zu verwendende Geschwindigkeitsprofil und der exakte Pfad, werden weiterhin im Kraftfahrzeug von den entsprechenden Fahrzeugsystemen unter Beachtung der Vorgaben des Sollkorridors geplant. Letztlich gibt der Sollkorridor dann also einen (zeitlichen und räumlichen) Rahmen vor, innerhalb dessen die konkrete Pfad- und Trajektorienplanung des Kraftfahrzeugs erfolgen soll.

Es sei noch angemerkt, dass zur Kommunikation der zentralen Recheneinrichtung mit den Kraftfahrzeugen übliche, grundsätzlich bereits bekannte Ansätze verfolgt werden können, wobei bevorzugt die Kommunikation mit den Kraftfahrzeugen über eine pWLAN-Verbindung und/oder eine GSM-Verbindung stattfindet. Beispielsweise kann sich das Kraftfahrzeug bei der Einfahrt in die Parkumgebung und gegebenenfalls bei der Wiederinbetriebnahme innerhalb der Parkumgebung im lokalen WLAN-Netzwerk anmelden, idealerweise derart, dass die aktuelle Position des neu angemeldeten Kraftfahrzeugs der zentralen Recheneinrichtung bekannt wird, beispielsweise, indem das Kraftfahrzeug im Bereich einer Zufahrt sensorisch erfasst wird und/oder ein wieder in Betrieb genommenes Kraftfahrzeug seinen gespeicherten Abstellplatz der zentralen Recheneinrichtung mitteilt. Zweckmäßigerweise kann mit dem Sollkorridor auch der Kartendatensatz oder zumindest der hinsichtlich des Sollkorridors relevante Anteil des Kartendatensatzes an das Kraftfahrzeug übertragen werden, welches diesen beispielsweise nutzen kann, um eigene Positionsbestimmungen durchzuführen und/oder die innerhalb der Vorgaben des Sollkorridors abgeleitete Solltrajektorie korrekt umzusetzen. Neben einem WLAN-Netzwerk sind selbstverständlich auch andere, drahtlose Kommunikationsmöglichkeiten im Rahmen der vorliegenden Erfindung einsetzbar, insbesondere GSM-Verbindungen.

Dabei ist es selbstverständlich zweckmäßig, wenn wenigstens ein Sollkorridor dynamisch aktualisiert wird, insbesondere bei einer Änderung der zugrundeliegenden Eingangsdaten. Nach einer Aktualisierung wird der aktualisierte Sollkorridor selbstverständlich wiederum an das entsprechende Kraftfahrzeug übertragen. Auf diese Weise kann auf Veränderungen innerhalb der Parkumgebung bzw. der Planung reagiert werden, wenn beispielsweise neue störende Objekte auftauchen, Kraftfahrzeuge von ihren Sollkorridoren abweichen, was selbstverständlich auch für zeitliche Abweichungen gilt, und dergleichen. Letztlich ist es also zweckmäßig, die Sollkorridore immer auf Grundlage der aktuell vorliegenden Eingangsdaten aktuell zu halten, da somit eine optimale Koordination des Verkehrs innerhalb der Parkumgebung gewährleistet wird.

Die Kraftfahrzeuge können dabei innerhalb der Parkumgebung manuell durch einen Fahrer betrieben werden, wobei dann der Sollkorridor bevorzugt genutzt wird, um entsprechende Ausgaben und/oder Fahranweisungen seitens eines Navigationssystems zu erzeugen, so dass der Fahrer zu seinem Zielort, sei es ein Abstellplatz oder die Ausfahrt, geführt werden kann. Besonders bevorzugt ist es im Rahmen des erfindungsgemäßen Verfahrens jedoch, wenn die Kraftfahrzeuge innerhalb der Parkumgebung wenigstens teilweise, insbesondere vollständig, automatisch entlang einer im Rahmen der Vorgaben des Sollkorridors ermittelten Trajektorie betrieben werden. Das erfindungsgemäße Verfahren erlaubt es aufgrund der zentralen Planung also, hochautomatisierte Parkvorgänge mit selbstfahrenden Kraftfahrzeugen in Parkumgebungen zu ermöglichen, wobei auch ein äußerst robustes Durchführen des erfindungsgemäßen Verfahrens möglich ist, da eine geringere Anzahl von Abweichungen von der vorgenommenen Planung der Sollkorridore stattfinden wird. Insbesondere werden Kraftfahrzeuge üblicherweise nacheinander die Parkumgebung betreten bzw. innerhalb der Parkumgebung in Betrieb genommen werden, so dass bei besonders gut voraussagbaren, vollautomatischen Kraftfahrzeugbewegungen innerhalb der Parkumgebung für neu hinzugekommene, in der Parkumgebung zu betreibende Kraftfahrzeuge einen Sollkorridor auf Basis der bereits vergebenen räumlichen und zeitlichen Wegabschnitte (Korridorabschnitte) der übrigen Kraftfahrzeuge vorgenommen werden kann. Dabei ist es selbstverständlich durchaus denkbar, dynamisch Anpassungen auch an den Sollkorridoren bereits innerhalb der Parkumgebung betriebener Kraftfahrzeuge vorzunehmen, wenn hierdurch eine Optimierung des Verkehrsflusses in der Parkumgebung in einer Gesamtbetrachtung gegeben ist.

In diesem Zusammenhang sieht eine vorteilhafte Weiterbildung des erfindungsgemäßen Verfahrens vor, dass die Parkumgebung wenigstens einen Übergabebereich aufweist, in dem ein Kraftfahrzeug zum automatischen Verbringen zu einem Abstellplatz abstellbar ist und/oder nach automatischem Rückverbringen von einem Abstellplatz zum Übergabebereich entgegennehmbar ist. Um sein Kraftfahrzeug vollautomatisch in der Parkumgebung einparken zu lassen, muss es der Fahrer letztendlich lediglich in den Übergabebereich bewegen und dort eine Bedienhandlung vornehmen, die der zentralen Recheneinrichtung mitteilt, dass das Kraftfahrzeug nun bereit ist, durch vollautomatisierten Betrieb in eine Abstellposition verbracht zu werden. Eine entsprechende Bedienhandlung kann dafür sorgen, dass ein Kraftfahrzeug von seinem Abstellplatz wieder vollautomatisiert in den und/oder einen weiteren Übergabebereich gefahren wird, wo es der Fahrer entgegennehmen und selbst wieder in Betrieb nehmen kann. Dabei sei darauf hingewiesen, dass insbesondere der Übergabebereich ebenso durch Sensoren der Parkumgebung überwacht werden kann, wobei durch Auswertung dieser entsprechenden Sensordaten bei Empfang einer Anforderung zum vollautomatischen Verbringen des Kraftfahrzeugs auf einen Abstellplatz vor dem Beginn des vollautomatisierten Betriebs überprüft werden kann, dass sich keine Personen und/oder Objekte im Übergabebereich und/oder dem Kraftfahrzeug befinden. Hierzu können beispielsweise Bildverarbeitungsalgorithmen auf Kamera- und/oder Laserscannerdaten angewandt werden, beispielsweise Objekterkennungsalgorithmen.

Mit besonderem Vorteil können die Behandlungen, über die automatische Fahrfunktionen innerhalb der Parkumgebung angewählt werden, über ein Mobilgerät eines Fahrers, insbesondere ein Mobiltelefon, bevorzugt ein Smartphone, anwählbar sein. Auf dem Mobilgerät kann beispielsweise eine Applikation (App) vorgesehen sein, die eine Bedienoberfläche mit Bedienelementen darstellt, über die der Fahrer automatische Fahrfunktionen anwählen kann, beispielsweise mithin eine Bedienhandlung durchführen kann, durch die das Mobilgerät eine Anforderung zum automatischen Einparken des Kraftfahrzeugs generiert und an die zentrale Recheneinrichtung übermittelt. Analog kann eine Anforderung zum Ausparken und Verbringen des Kraftfahrzeugs in den Übergabebereich durch eine Bedienhandlung erzeugt und an die zentrale Steuereinrichtung übermittelt werden. Dabei ist das Mobilgerät in besonders bevorzugter Ausgestaltung mit dem Kraftfahrzeug gekoppelt, beispielsweise durch eine Bluetooth-Verbindung, so dass eine Zuordnung eines anfragenden Mobilgeräts zu einem Kraftfahrzeug für die zentrale Recheneinrichtung problemlos möglich ist, wobei selbstverständlich auch andere Varianten denkbar sind, beispielsweise eine in dem Mobilgerät gespeicherte Identifikation des Kraftfahrzeugs, was insbesondere dann zweckmäßig ist, wenn die Kopplung zur Zeit nicht aktuell vorhanden ist, beispielsweise bei einem Wunsch zum Verbringen des Kraftfahrzeugs von einer Abstellposition in den Übergabebereich. Hierbei kann das Kraftfahrzeug selbstverständlich auch über einen gespeicherten Abstellplatz oder dergleichen identifiziert werden. Denkbar sind auch Varianten, in denen zumindest bei einer Anforderung zum Einparken des Kraftfahrzeugs die entsprechende Anforderung über das Kraftfahrzeug an die zentrale Recheneinrichtung weitergegeben wird. Ersichtlich sind eine Vielzahl von Ausgestaltungen hinsichtlich der Kommunikation und Zuordnung möglich, die allesamt im Rahmen der vorliegenden Erfindung Anwendung finden können.

Wurde seitens der zentralen Recheneinrichtung eine Anforderung für eine automatische Fahrfunktion empfangen, kann dies entsprechend quittiert werden, beispielsweise bei Verwendung eines Mobilgeräts (mobilen Endgeräts) durch eine entsprechende Ausgabe, bevorzugt ist es jedoch, wenn eine durch die zentrale Recheneinrichtung empfangene Anforderung durch eine Signalausgabe mittels einer Lichtsignalanlage der Parkumgebung und/oder einer Beleuchtungseinrichtung des Kraftfahrzeugs erfolgt. Beispielsweise kann ein grünes Bestätigungslicht an einer Lichtsignalanlage der Parkumgebung aufleuchten und/oder die Fahrtrichtungsanzeiger des Kraftfahrzeugs können die empfangene Anforderung durch ein kurzes Aufblinken quittieren, wie dies bereits von anderen Fernsteueraktionen bekannt ist.

Ist die Anforderung empfangen und verarbeitet worden und ist ein (erster) Sollkorridor für das Kraftfahrzeug bestimmt worden, wobei, wie bereits erwähnt, in einigen Ausgestaltungen auch sichergestellt werden kann, dass keine Personen und/oder Objekte im Übergabebereich und/oder im Kraftfahrzeug verblieben sind, kann der vollautomatische Betrieb des Kraftfahrzeugs beginnen. Ist eine Schranke an der Einfahrt in die Parkumgebung vorgesehen, kann diese nun geöffnet werden, so dass das Kraftfahrzeug vollautomatisch in Richtung eines Zielabstellplatzes bewegt werden kann. Nach dem Kraftfahrzeug wird eine derartige Schranke wieder geschlossen. Eine Ausgestaltung sieht vor, dass der Beginn der vollautomatischen Führung des Kraftfahrzeugs durch den Fahrer noch zu überwachen ist, beispielsweise für eine vorgegebene Überwachungsstrecke, in der es noch möglich wäre, dass Personen an das Kraftfahrzeug herangelangen können und dergleichen. In diesem Kontext kann eine Auswertung der Sensordaten der den Übergabebereich überwachenden Sensoren auch dahingehend erfolgen, das überprüft wird, ob der Fahrer noch anwesend ist, solange sich das Kraftfahrzeug auf der vorgegebenen Überwachungsstrecke befindet, wobei dann, wenn der Fahrer früher als abwesend festgestellt wird, die automatische Fahrzeugführung wieder abgebrochen werden kann. Wird in vorteilhafter Ausgestaltung zur Anwahl von automatischen Fahrfunktionen ein Mobilgerät verwendet, kann an dieses Mobilgerät eine Bestätigung gesendet werden, dass der Fahrer seine Überwachungstätigkeit beenden kann, sobald das Kraftfahrzeug die Überwachungsstrecke verlassen hat.

Sensoren, die zur Überwachung in Parkumgebungen, insbesondere Parkhäusern, eingesetzt werden können, umfassen beispielsweise Kameras, LIDAR-Sensoren (beispielsweise Laserscanner), Kontaktschleifen im Boden und dergleichen. Derartige Sensoren können mit der zentralen Recheneinrichtung über ein Bussystem verbunden sein. Die Sensoren bzw. deren Sensordaten werden im Rahmen der vorliegenden Erfindung nun nicht nur dazu genutzt, den Kartendatensatz zu aktualisieren, sondern es werden die innerhalb der Parkumgebung betriebenen Kraftfahrzeuge nachverfolgt, insbesondere auch bezüglich ihrer Position, so dass der zentralen Recheneinrichtung sämtliche sich aktiv bewegenden Kraftfahrzeuge sowie deren Positionen bekannt sind.

Dabei kann in zweckmäßiger Ausgestaltung der vorliegenden Erfindung auch vorgesehen sein, dass neben den Sensordaten zur Überwachung auch von wenigstens einem Teil der innerhalb der Parkumgebung betriebenen Kraftfahrzeuge übermittelte Umgebungsdaten und/oder den Betriebszustand des jeweiligen Kraftfahrzeugs beschreibende Ego-Daten der Kraftfahrzeuge berücksichtigt werden. Es kann mithin vorgesehen sein, dass, insbesondere zur Ermittlung der Verkehrslagedaten, auch von Kraftfahrzeugen über die ohnehin bestehende Kommunikationsverbindung übermittelte Fahrzeugdaten, konkret Umgebungsdaten und/oder Ego-Daten, berücksichtigt werden. Umgebungsdaten, die insbesondere aus im Kraftfahrzeug aufgenommenen Sensordaten abgeleitet werden und/oder diesen entsprechen, können genutzt werden, um die Sensordaten der Sensoren der Parkumgebung zu ergänzen und ein verbessertes Abbild der Parkumgebung zu gewinnen. Egodaten der Kraftfahrzeuge helfen sowohl bei deren Überwachung wie auch bei nicht vollautomatisch betriebenen Kraftfahrzeugen bei der Vorausberechnung von zukünftigen Trajektorien dieser Kraftfahrzeuge, wobei insbesondere auch plausibilisiert werden kann, ob dem Sollkorridor gefolgt wird und dergleichen. Vorzugsweise können die Egodaten eine innerhalb des Kraftfahrzeugs selbst, insbesondere unter Verwendung des an das Kraftfahrzeug übermittelten Kartendatensatzes, ermittelte aktuelle Position des jeweiligen Kraftfahrzeugs umfassen, welche insbesondere mit einer aus den Sensordaten ermittelten Position des Kraftfahrzeugs fusioniert wird. Dabei kann durchaus vorgesehen sein, dass eine innerhalb des Kraftfahrzeugs ermittelte Position des Kraftfahrzeugs bereits aus einer Fusion verschiedener Positionshypothesen hervorgeht, beispielsweise aus einer Nachverfolgung des gefahrenen Weges seit einer letzten Position und aus einer mittels Umgebungsdaten in dem Kartendatensatz bestimmten Position. Hierzu können beispielsweise innerhalb der Parkumgebung Marker vorgesehen sein, die durch Sensoren des Kraftfahrzeugs erfassen werden und Informationen zur Position des Kraftfahrzeugs enthalten. Eine derartige, im Kraftfahrzeug selbst ermittelte Position kann Plausibilisierung einer aus den Sensordaten der Sensoren der Parkumgebung abgeleiteten Position des Kraftfahrzeugs dienen und/oder die Positionsbestimmung insgesamt verbessern, und somit zu einer verbesserten Grundlage zur koordinierten Fahrplanung der innerhalb der Parkumgebung betriebenen Kraftfahrzeuge beitragen.

Eine Weiterbildung des erfindungsgemäßen Verfahrens sieht vor, dass bei einem detektierten räumlichen und zeitlichen Konflikt des Sollkorridors mit einem im Rahmen der Überwachung detektierten Objekt und/oder einem Sollkorridor eines andere Kraftfahrzeugs eine Anpassung des Sollkorridors erfolgt und/oder eine auf den Konflikt hinweisende Konfliktinformation an das insbesondere mit wenigstens einer Person besetzte Kraftfahrzeug übermittelt wird. Ein spezieller Aspekt der Koordination und dynamischen Anpassungen der Sollkorridore ist es also, ständig zu überwachen, ob Konflikte zwischen den Sollkorridore der einzelnen in der Parkumgebung betriebenen Kraftfahrzeuge auftreten, um eine entsprechende Anpassung der Sollkorridore zu ermöglichen. Besonders zweckmäßig ist eine solche Funktionalität jedoch auch dann, wenn das Kraftfahrzeug nicht vollständig automatisch geführt wird, sondern beispielsweise nach Anweisungen eines Navigationssystems durch einen Fahrer betrieben wird, da es dann zu Abweichungen von dem eigentlich geplanten Sollkorridor kommen kann, die zu Konflikten mit Sollkorridoren anderer Kraftfahrzeuge oder gar mit Objekten innerhalb der Parkumgebung führen können, was jedoch auch bei anderen Umständen eintreten kann. Wird mithin beispielsweise erkannt, dass sich ein Kraftfahrzeug auf einem Kollisionskurs mit einem Objekt, beispielsweise einer Wand oder einem anderen Kraftfahrzeug, befindet, kann eine entsprechende Konfliktinformation an das betreffende Kraftfahrzeug gesendet und dort ausgegeben werden und/oder bei der konkreten Trajektorienplanung berücksichtigt werden. Dies ist besondere zweckmäßig, wenn sich das konfliktierende Objekt noch außerhalb der Sensorreichweite befindet.

Vorteilhafterweise kann durch die Recheneinrichtung wenigstens eine Lichtsignalanlage und/oder Schranke der Parkumgebung in Abhängigkeit der Sollkorridore angesteuert werden. Die zentrale Recheneinrichtung ist mithin in der Lage, sämtliche Lichtsignalanlagen und/oder Schranken innerhalb der Parkumgebung zu steuern, beispielsweise mittels eines Gebäudeinstallationsbusses. Derartiges kann beispielsweise, wie bereits dargelegt wurde, zweckmäßig sein, wenn eine kontrollierte Übergabe des Kraftfahrzeugs im Übergabebereich derart erfolgt, dass anschließend eine vollautomatische Führung des Kraftfahrzeugs zu einem Zielabstellplatz erfolgt; selbstverständlich sind entsprechende Lichtsignale auch bei einer Anforderung einer vollautomatisierten Rückfahrt des Kraftfahrzeugs zu dem oder einem weiteren Übergabebereich zweckmäßig.

Zweckmäßigerweise werden die Sollkorridore im Rahmen eines Pfadplanungsalgorithmus, insbesondere eines A*-Algorithmus, ermittelt. Pfadplanungsalgorithmen sind im Stand der Technik bereits bekannt. Sobald ein Zielabstellplatz bestimmt wurde, worauf im Folgenden noch näher eingegangen wird, kann mithin über einen Pfadplanungsalgorithmus ein Fahrweg zu diesem aufgefunden werden, wobei häufig bereits eine Optimierungskomponente vorhanden ist. Entsprechend kann selbstverständlich auch eine Pfadplanung vom Abstellplatz des Kraftfahrzeugs zur Ausfahrt der Parkumgebung erfolgen.

Wie bereits erwähnt, nutzen viele Pfadplanungsalgorithmen bereits bestimmte Optimierungskriterien, um einen idealen Fahrweg zu ermitteln. Erfindungsgemäß wird diese Optimierung bevorzugter Weise durch eine Berücksichtigung aller in der Parkumgebung betriebenen Kraftfahrzeuge erweitert, das bedeutet, es wird auch kraftfahrzeugübergreifend optimiert, sowohl was die räumliche als auch die zeitliche Pfadplanung angeht. Muss beispielsweise ein Kraftfahrzeug einen nur leicht verlängerten Weg zu einem Zielabstellplatz hinnehmen, damit ein anderes Kraftfahrzeug deutlich schneller zur Ausfahrt gelangen kann, können entsprechende Modifikationen der jeweiligen Sollkorridore in Betracht gezogen werden. Diese für die Parkumgebung globale Optimierung ist eine weitere Ausprägung der Gesamtkoordination, die durch die zentrale Pfadplanung seitens der zentralen Recheneinrichtung ermöglicht wird.

Eine weitere zweckmäßige Ausgestaltung der Erfindung sieht vor, dass die Sollkorridore in Wegabschnitte unterteilt sind, wobei für jeden Wegabschnitt ein Zeitfenster zum Durchfahren des Wegabschnitts ausgewählt wird, in dem der Wegabschnitt nicht mit einem Wegabschnitt eines anderen Kraftfahrzeugs konfliktiert. Damit ist eine Konkretisierung der zeitlichen Koordination seitens der zentralen Recheneinrichtung gegeben, die letztlich einer sektorweisen Freigabe von Fahrzeugbewegungen innerhalb der Parkumgebung entspricht. Es wird nicht nur der räumliche Fahrweg zum Abstellplatz bzw. zur Ausfahrt seitens der zentralen Recheneinrichtung geplant, sondern es wird auch ein zeitlicher Korridor im Gesamtablauf des Verkehrs in der Parkumgebung ermittelt und reserviert. Hierzu kann beispielsweise vorgesehen sein, dass zur Auswahl der Zeitfenster ein Mutex-Verfahren verwendet wird. Mutex oder wechselseitiger Ausschluss steht für eine Gruppe von Verfahren, durch die ungewollte Wechselwirkungen zwischen unterschiedlichen gesteuerten Objekten vermeiden können.

Diese zeitliche Koordination kann selbstverständlich als ein Aspekt der Pfadplanung an sich realisiert sein und auch in die Wertung bei der Planung optimaler Sollkorridore einfließen. Müsste beispielsweise ein Kraftfahrzeug an einer Stelle zu lange warten, kann beispielsweise ein anderer Weg gewählt werden oder gar das Ziel angepasst werden, worauf im Folgenden noch näher eingegangen werden wird.

So sieht eine besonders bevorzugte Ausgestaltung der vorliegenden Erfindung vor, dass bei einem innerhalb der Parkumgebung auf einem Abstellplatz abzustellenden Kraftfahrzeug ein Zielabstellplatz als Zielort des Sollkorridors in Abhängigkeit der Verkehrslagedaten und der Sollkorridore anderer Kraftfahrzeuge vergeben wird. Mit anderen Worten kann auch der Zielabstellplatz in Abhängigkeit der Eingangsdaten ausgewählt werden, mithin einen einstellbaren Parameter des Sollkorridors darstellen, der jedoch auch dynamisch angepasst werden kann. Insbesondere kann hierbei vorgesehen sein, dass die Auswahl des Zielabstellplatzes im Hinblick auf einen kurzen Weg und/oder kurze Wartezeiten während des Sollkorridors gewählt wird. Ist beispielsweise aus den Verkehrslagedaten und den Sollkorridoren anderer Kraftfahrzeuge bekannt, dass in einem bestimmten Stockwerk eines Parkhauses ein anderes Kraftfahrzeug gerade einparkt, kann ein aktuell betrachtetes Kraftfahrzeug einem anderen Stockwerk zugewiesen werden, um Wartezeiten, bis der Parkvorgang des anderen Kraftfahrzeugs abgeschlossen ist, zu vermeiden.

Neben dem Verfahren betrifft die Erfindung auch eine zentrale Recheneinrichtung einer Parkumgebung, insbesondere eines Parkhauses, die zur Durchführung des erfindungsgemäßen Verfahrens ausgebildet ist. Sämtliche Ausführungen bezüglich des erfindungsgemäßen Verfahrens lassen sich analog auf die erfindungsgemäße Recheneinrichtung übertragen, so dass mit dieser die bereits genannten Vorteile erhalten werden können. Insbesondere weist eine derartige Recheneinrichtung mithin geeignete Schnittstellen zu der Parkumgebung zugeordneten Sensoren sowie eine Kommunikationsschnittstelle zu den Kraftfahrzeugen und gegebenenfalls auch Mobilgeräten auf.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Skizze zur Struktur einer Parkumgebung,
- Fig. 2: einen Ablaufplan eines Ausführungsbeispiels des erfindungsgemäßen Verfahrens beim Einparken eines Kraftfahrzeugs, und
- Fig. 3: einen Ablaufplan eines Ausführungsbeispiels des erfindungsgemäßen Verfahrens beim Ausparken eines Kraftfahrzeugs.

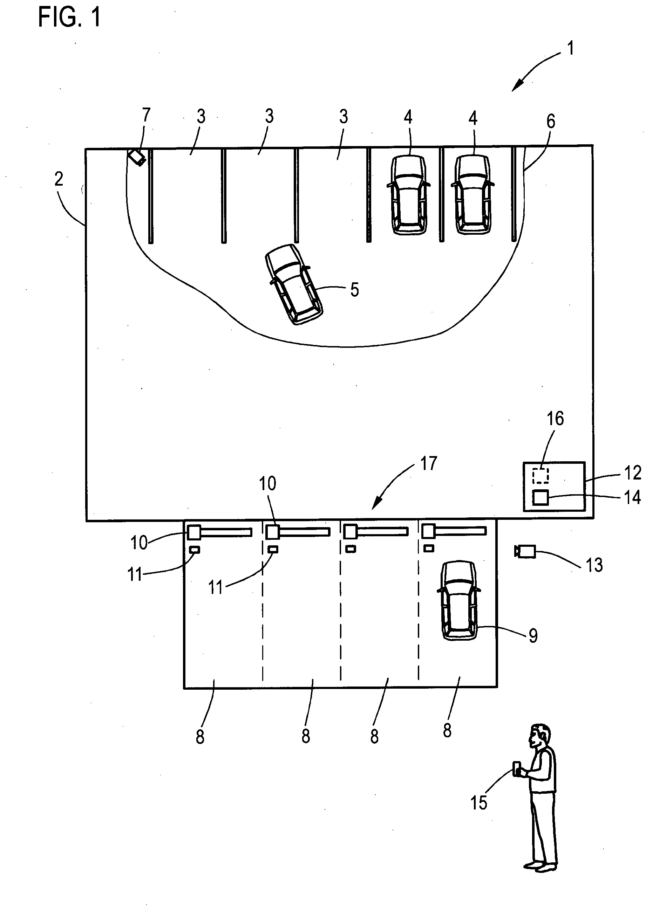

Fig. 1 zeigt eine Prinzipskizze einer Parkumgebung 1, in der das erfindungsgemäße Verfahren angewendet werden kann. Es handelt sich dabei konkret um ein Parkhaus 2 mit mehreren Stockwerken/Ebenen, wobei innerhalb der Parkumgebung zwei vorhandene Abstellplätze 3, darauf abgestellte Kraftfahrzeuge 4 sowie ein innerhalb der Parkumgebung betriebenes Kraftfahrzeug 5 der Übersichtlichkeit halber nur in einem schematischen Ausschnitt 6 gezeigt sind. Auch zu erkennen ist repräsentativ für verschiedene Sensoren zur Überwachung der Parkumgebung 1 eine Kamera 7, mit der unter anderem auch das Kraftfahrzeug 5 erfasst werden kann. Weitere denkbare Sensoren umfassen Kontaktschleifen, LIDAR-Sensoren, Laserscanner und dergleichen.

Im Bereich 17 einer Ein- und Ausfahrt in das Parkhaus 2 der Parkumgebung 1 sind mehrere Übergabebereiche 8 dargestellt, die dynamisch zum Abstellen von Kraftfahrzeugen 9 zum vollautomatischen Einparken in der Parkumgebung 1 oder zum Bereitstellen automatisch ausgeparkter Kraftfahrzeuge 4, 5 nach vollautomatisierter Führung zur Ausfahrt genutzt werden können. An den Übergabebereichen sind Schranken 10 sowie Lichtsignalanlagen 11 vorgesehen.

Der Betrieb innerhalb der Parkumgebung 1 wird vollständig von einer zentralen Recheneinrichtung 12 aus gesteuert, die über ein Sensorbussystem die Sensordaten der erwähnten Überwachungssensoren empfängt, wobei auch den Übergabebereichen 8 wenigstens ein Sensor 13 zugeordnet ist. Zudem kann die zentrale Recheneinrichtung 12 die Schranken 10 und Lichtsignalanlagen 11 an den Übergabebereichen sowie gegebenenfalls weiterer vorhandener Lichtsignalanlagen und Schranken innerhalb der Parkumgebung 1 steuern. Hierfür kann ein Gebäudeinstallationsbus verwendet werden.

Die zentrale Recheneinrichtung 12 weist zudem eine WLAN-Kommunikationsschnittstelle 14 auf, über die eine Kommunikationsverbindung zu Kraftfahrzeugen 4, 5 und 9 sowie zu Mobilgeräten 15 aufgebaut werden können, die von Fahrern der Kraftfahrzeuge 4, 5 und 9 mit sich geführt werden und auf denen eine Applikation vorliegt, die es erlaubt, automatische Fahrfunktionen anzuwählen, worauf im Folgenden noch näher eingegangen werden wird.

In einer Speichereinrichtung 16 der zentralen Recheneinrichtung 12 ist zudem ein Kartendatensatz der Parkumgebung 1 abgelegt.

Der Kartendatensatz kann eine Karte in unterschiedlicher Ausführung enthalten, beispielsweise als Grid-Karte, Fahrbahnnetzinformation und dergleichen, und kann aus Gebäudeplänen abgeleitet werden, manuell vermessen werden und/oder durch Fahrzeuge mit geeigneter Sensorik erzeugt und aktualisiert werden. Auch die Sensoren 7, 13 der Parkumgebung 1 werden genutzt, um den Kartendatensatz immer aktuell zu halten.

Die zentrale Recheneinrichtung 12 ist zur Verkehrskoordination innerhalb der Fahrumgebung gemäß dem erfindungsgemäßen Verfahren ausgebildet, das bedeutet, die zentrale Recheneinrichtung 12 wertet zunächst die Sensordaten der Sensoren 7, 13 der Parkumgebung aus, um die aktuellen Positionen der innerhalb der Parkumgebung 1 betriebenen Kraftfahrzeuge 5 zu ermitteln und deren Bewegung nachzuverfolgen. Hieraus ergeben sich in der Gesamtheit Verkehrslagedaten, die gemeinsam mit dem Kartendatensatz und bereits ermittelten und/oder gleichzeitig ermittelter Sollkorridore anderer in der Parkumgebung 1 betriebener Kraftfahrzeuge 5 genutzt werden können, um für jedes innerhalb der Parkumgebung 1 betriebene Kraftfahrzeug 5 einen Sollkorridor, der zeitliche und räumliche Vorgaben für die konkrete, fahrzeuginterne Trajektorienplanung wiedergibt, zum entsprechenden Zielort, insbesondere also einem Zielabstellplatz und/oder einem Übergabebereich 8, zu ermitteln. Nachdem im vorliegenden Ausführungsbeispiel die Kraftfahrzeuge 4, 5, 9 innerhalb der Parkumgebung 1 vollautomatisch betrieben werden, das bedeutet, ein zur vollautomatischen Fahrzeugführung ausgebildetes Fahrzeugsystem nutzen, können die Sollkorridore an die innerhalb der Parkumgebung 1 betriebenen Kraftfahrzeuge 5 übermittelt und dort entsprechend vollautomatisch umgesetzt werden, indem die darin enthaltenen zeitlichen und räumlichen Vorgaben als Grenzen bei der Ermittlung konkreter, zu befahrener Trajektorien berücksichtigt werden. Jedoch sind, wie oben bereits dargelegt wurde, auch Ausführungsbeispiele der vorliegenden Erfindung denkbar, in denen die innerhalb der Parkumgebung 1 betriebenen Kraftfahrzeuge 5 wenigstens teilweise manuell gesteuert werden.

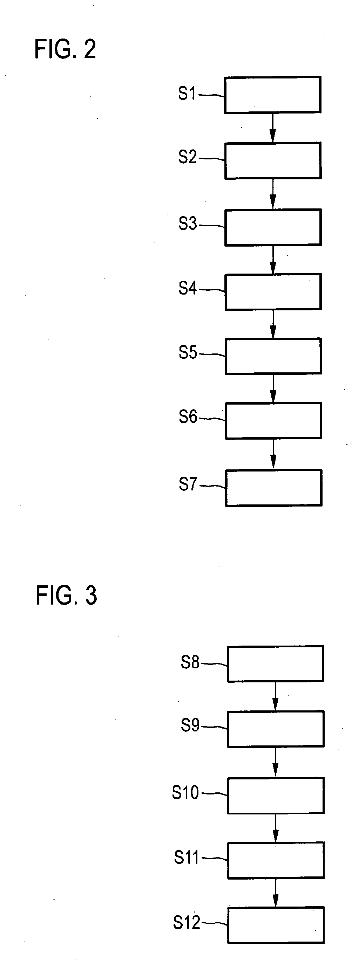

Zur genaueren Erläuterung sollen nun hinsichtlich der Fig. 2 und 3 auf das Einparken eines Kraftfahrzeugs 4, 5, 9 und auf das Ausparken eines Kraftfahrzeugs 4, 5, 9 bezogene Ablaufpläne betrachtet werden.

Will ein Fahrer sein Kraftfahrzeug, beispielsweise das Kraftfahrzeug 9, automatisiert in der Parkumgebung 1 einparken lassen, bewegt er es zunächst in einen Übergabebereich 8. Dabei sei darauf hingewiesen, dass es durchaus möglich ist, dass das Kraftfahrzeug 9 bereits zuvor bei der Parkumgebung 1 angemeldet wurde, insbesondere dann, wenn beispielsweise die Parkumgebung 1 schon länger ein Ziel einer Navigation des entsprechenden Kraftfahrzeugs 9 war und die zentrale Recheneinrichtung 12 über eine entsprechende Kommunikationsverbindung, beispielsweise einen Zugang zum Internet, verfügt.

Das Kraftfahrzeug 9 wird im Übergabebereich 8 bereits von den Sensoren 13 erfasst und meldet sich gegebenenfalls bereits selbsttätig über pWLAN bei der zentralen Recheneinrichtung 12 an. In alternativen Ausführungsbeispielen kann auch eine GSM-Verbindung genutzt werden. Das mitgeführte Mobilgerät 15 des Fahrers weist nun, wie bereits beschrieben wurde, eine Applikation auf, um automatische Fahrfunktionen innerhalb der Parkumgebung 1 anzuwählen, und ist mit dem Kraftfahrzeug 9 zumindest soweit gekoppelt, dass das zugehörige Kraftfahrzeug 9 identifiziert werden kann. Auch das Mobilgerät 15 stellt, spätestens mit Aufruf der Applikation auf dem Mobilgerät 15, eine WLAN-Kommunikationsverbindung zu der zentralen Recheneinrichtung 12 her.

In einem Schritt S2 erzeugt der Fahrer über eine Bedienhandlung an dem mobilen Endgerät 15, hier einem Smartphone, nun eine Anforderung zum automatischen Einparken des Kraftfahrzeugs 9, welche an die zentrale Recheneinrichtung 12 übermittelt wird. Sind (geeignete) Abstellplätze 3 verfügbar, wird nun seitens der zentralen Recheneinrichtung 12 durch Auswertung von Sensordaten der Sensoren 13 zunächst überprüft, ob sich Personen und/oder Objekte im Übergabebereich 8 befinden, was einen Beginn der vollautomatischen Fahrzeugführung verhindern würde. Dies geschieht in einem Schritt S3.

In einem Schritt S4 wird für das im Übergabebereich abgestellte Kraftfahrzeug 9 nun ein Sollkorridor inklusive Zielabstellplatz ermittelt. Es wird mithin ein freier, passender Abstellplatz 3 dem Kraftfahrzeug 9 als Zielabstellplatz zugewiesen und der (zumindest grobe) Weg zu diesem Abstellplatz 3 wird unter Nutzung von Pfadplanungsalgorithmen innerhalb der zentralen Recheneinrichtung 12 berechnet, wobei auch ein zeitlicher Korridor im Gesamtablauf bestimmt und reserviert wird, wozu Mutex-Verfahren eingesetzt werden. Hierzu kann der räumliche Fahrweg in Wegabschnitte bzw. Sektoren unterteilt werden, die jeweils in Zeitfenstern durchfahren werden, in denen gerade kein anderer Wegabschnitt eines Sollkorridors eines anderen in der Parkumgebung 1 betriebenen Kraftfahrzeugs 5 mit dem Wegabschnitt konfliktiert. Es erfolgt also eine sektorweise Freigabe der mittels des Sollkorridors, so dass insgesamt eine räumliche und eine zeitliche Planung bzw. Vorgabe des Sollkorridors in Abhängigkeit der Verkehrslagedaten, der Sollkorridore anderer in der Parkumgebung 1 betriebener Kraftfahrzeuge 5 und des Kartendatensatzes erfolgt. Die Ermittlung des Sollkorridors ist dabei einer Optimierung unterworfen, die in einer Gesamtbetrachtung auf alle innerhalb der Parkumgebung 1 betriebenen Kraftfahrzeuge 1 abstellt. Dabei ist im Übrigen auch der Zielabstellplatz ein veränderbarer Parameter der Sollkorridore. Parkt beispielsweise auf einem bestimmten Stockwerk ein Kraftfahrzeug 5 gerade ein, kann das Kraftfahrzeug 9 auf ein anderes Stockwerk geleitet werden, um Wartezeiten, bis der Parkvorgang des anderen Kraftfahrzeugs 5 abgeschlossen ist, zu vermeiden.

Im Schritt S5 beginnt nun die vollautomatisierte Fahrzeugführung des Kraftfahrzeugs 9 zum Zielabstellplatz unter Berücksichtigung der Vorgaben durch den Sollkorridor, wobei die Planung der konkreten Trajektorie, also des Pfades und des Geschwindigkeitsprofils im Detail, seitens des Kraftfahrzeugs in einem entsprechenden Fahrzeugsystem stattfindet. Beispielsweis können, um den zeitlichen Ablauf einzuhalten, auch entsprechende Geschwindigkeiten für die konkret zu fahrende Trajektorie gewählt werden. Über die Lichtsignalanlage 11 wird die Anforderung zum Einparken bestätigt, die Schranke 10 öffnet sich und das Kraftfahrzeug 9 setzt sich in Bewegung. Zugleich wird über die Sensoren 13 überprüft, ob der Fahrer die Fahrt des Kraftfahrzeugs 9 noch überwacht, bis es eine Überwachungsstrecke bis hinter der Schranke 10 zurückgelegt hat, woraufhin ein entsprechender Hinweis an das Mobilgerät 15 übertragen wird und sich der Fahrer entfernen kann.

Gemäß dem Schritt S6 wird die Sollkorridor während des nun folgenden Einparkvorgangs ständig dynamisch überwacht, wobei wenigstens bei einer Veränderung der Eingangsdaten, insbesondere also der Verkehrslagedaten und/oder der Sollkorridore anderer in der Parkumgebung 1 betriebener Kraftfahrzeuge 5, der Sollkorridor aktualisiert werden kann. Wird z. B., nachdem die vollautomatische Fahrzeugführung entlang des Sollkorridors bereits begonnen hat, eine Anforderung zum Ausparken eines geparkten Kraftfahrzeugs 4 auf demselben Stockwerk erhalten, in dem der aktuelle Zielabstellplatz des Kraftfahrzeugs 9 liegt, kann der Zielabstellplatz dynamisch verändert werden, um zu lange Wartezeiten und Konflikte zu verhindern, insbesondere, wenn sich ein Konflikt zwischen den Sollkorridoren ergibt. Es sei an dieser Stelle noch angemerkt, dass selbstverständlich auch, wie grundsätzlich bekannt, die konkrete Trajektorienplanung im Kraftfahrzeug 9 Anpassungen aufgrund aktueller Sensordaten und Betriebsdaten des Kraftfahrzeugs 9 unterworfen sein kann, wobei dennoch dabei innerhalb der Vorgaben des Sollkorridors gehandelt wird und bei einem geänderten, aktuellen Sollkorridor auch eine vollumfängliche Neuberechnung im Kraftfahrzeug 9 angestoßen werden kann.

In einem Schritt S7 hat das Kraftfahrzeug 9 dann den Zielabstellplatz erreicht und wird außer Betrieb genommen. Eine Mitteilung über den erfolgreichen Abschluss des Einparkvorgangs wird an das Mobilgerät 15 des Fahrers übertragen.

Fig. 3 zeigt das Vorgehen, wenn ein Fahrer ein geparktes Kraftfahrzeug 4 wieder in einem Übergabebereich 8 entgegennehmen möchte. In einem Schritt S8 sendet der Fahrer über sein Mobilgerät 15 eine Anforderung zum Ausparken seines Kraftfahrzeugs 4 an die zentrale Recheneinrichtung 12. Dort wird die Anforderung empfangen und der Empfang bestätigt, beispielsweise durch Übermittlung der Bestätigung an das Mobilgerät 15 und entsprechende Ausgabe dort. Die zentrale Recheneinrichtung 12 ermittelt nun als Zielposition einen Übergabebereich 8 und einen Sollkorridor zu diesem Übergabebereich 8. Dann wird das Kraftfahrzeug 4 in einem Schritt S9 vollautomatisch in Betrieb genommen. In einem Schritt S10 wird dann entsprechend zum Schritt S6 der Sollkorridor ständig im Hinblick auf mögliche eingetretene Veränderungen aktuell gehalten, wobei im Schritt S11 bei Erreichen der Schranke 10 diese durch die zentrale Steuereinrichtung 12 zum Öffnen angesteuert wird, so dass das Kraftfahrzeug 4 auf den Übergabebereich 8 gefahren werden kann, wobei die entsprechende Lichtsignalanlage 11 beispielsweise zur Warnung hinsichtlich des automatischen Betriebs des Kraftfahrzeugs betrieben werden kann. Ist das Kraftfahrzeug 4 im Schritt S12 auf dem Übergabebereich 8 abgestellt, wird eine entsprechende Benachrichtigung an das Mobilgerät 15 des Fahrers übermittelt, die Lichtsignalanlage 11 schaltet beispielsweise auf grünes Licht und der Fahrer kann in sein Kraftfahrzeug 4 einsteigen und die Parkumgebung 1 verlassen.

Es sei in diesem Kontext noch angemerkt, dass es auch denkbar ist, aus dem Sollkorridor eine Zeit ermitteln, zu der das Kraftfahrzeug 4 dann in dem Übergabebereich 8 verfügbar sein wird und diese an das Mobilgerät 15 zu übermitteln, so dass sich der Fahrer entsprechend einstellen kann.

## Patentansprüche

1. Verfahren zur Verkehrskoordinierung von Kraftfahrzeugen (4, 5, 9) in einer Parkumgebung (1), wobei der Parkumgebung (1) eine zentrale Recheneinrichtung (12), insbesondere ein Server, und an die zentrale Recheneinrichtung (12) Sensordaten liefernde, die Parkumgebung (1) überwachende Sensoren (13) zugeordnet sind und auf der zentralen Recheneinrichtung (12) ein Kartendatensatz der Parkumgebung (1) abgelegt ist, wobei die zentrale Recheneinrichtung (12) zur räumlichen und zeitlichen Koordination des Verkehrs in der Parkumgebung (1) ausgebildet ist, indem durch Überwachung unter Auswertung wenigstens der Sensordaten aktuelle, die Positionen von innerhalb der Parkumgebung (1) betriebenen Kraftfahrzeugen (5) umfassende Verkehrslagedaten der Parkumgebung (1) ermittelt werden und für die in der Parkumgebung (1) betriebenen Kraftfahrzeuge (5) jeweils unter Berücksichtigung der Verkehrslagedaten, des Kartendatensatzes sowie von für andere Kraftfahrzeuge (5) ermittelten räumlichen und zeitlichen Sollkorridore als Eingangsdaten ein räumlicher und zeitlicher Sollkorridor, der zeitliche und räumliche Grenzen, innerhalb derer die konkrete Pfad- und Trajektorienplanung des Kraftfahrzeugs erfolgen soll, vorgibt, zu einem Zielort des Kraftfahrzeugs (5) ermittelt und an das jeweilige Kraftfahrzeug (5) übermittelt wird, und
**dadurch gekennzeichnet, dass** bei einem geplanten Verlassen der Parkumgebung (1) durch ein Kraftfahrzeug (4) dann, wenn, insbesondere aufgrund hohen Verkehrsaufkommens, die Zeit bis zum Erreichen einer Ausfahrt gemäß eines optimalen Sollkorridors einen Schwellwert übersteigt, eine Warteempfehlung an das Kraftfahrzeug (4) und/oder ein dem Kraftfahrzeug (4) zugeordnetes Mobilgerät (15), mit dem eine Anforderung auf automatische Ausfahrt des Kraftfahrzeugs (4) an die zentrale Recheneinrichtung (12) übermittelt wurde, übermittelt und dort ausgegeben wird.

2. Verfahren nach Anspruch 1,
**dadurch gekennzeichnet,**
**dass** die Kraftfahrzeuge (5) innerhalb der Parkumgebung (1) wenigstens teilweise, insbesondere vollständig automatisch entlang einer im Rahmen der Vorgaben des Sollkorridors ermittelten Trajektorie betrieben werden.

3. Verfahren nach Anspruch 2,
**dadurch gekennzeichnet,**
**dass** die Parkumgebung (1) wenigstens einen Übergabebereich (8) aufweist, in dem ein Kraftfahrzeug (4, 5, 9) zum automatischen Verbringen zu einem Abstellplatz (3) abstellbar ist und/oder nach automatischem Rückverbringen von einem Abstellplatz (3) zum Übergabebereich (8) entgegennehmbar ist.

4. Verfahren nach Anspruch 2 oder 3,
**dadurch gekennzeichnet,**
**dass** automatische Fahrfunktionen innerhalb der Parkumgebung (1) über ein Mobilgerät (15) eines Fahrers, insbesondere ein Mobiltelefon, anwählbar sind.

5. Verfahren nach einem der vorangehenden Ansprüche,
**dadurch gekennzeichnet,**
**dass** neben den Sensordaten zur Überwachung auch von wenigstens einem Teil der innerhalb der Parkumgebung (1) betriebenen Kraftfahrzeuge (5) übermittelte Umgebungsdaten und/oder den Betriebszustand des jeweiligen Kraftfahrzeugs (5) beschreibende Egodaten der Kraftfahrzeuge (5) berücksichtigt werden.

6. Verfahren nach Anspruch 5,
**dadurch gekennzeichnet,**
**dass** die Egodaten eine innerhalb des Kraftfahrzeugs (5) selbst, insbesondere unter Verwendung des an das Kraftfahrzeug (5) übermittelten Kartendatensatzes, ermittelte aktuelle Position des jeweiligen Kraftfahrzeugs (5) umfassen, welche insbesondere mit einer aus den Sensordaten ermittelten Position des Kraftfahrzeugs (5) fusioniert wird.

7. Verfahren nach einem der vorangehenden Ansprüche,
**dadurch gekennzeichnet,**
**dass** bei einem detektierten räumlichen und zeitlichen Konflikt des Sollkorridors mit einem im Rahmen der Überwachung detektierten Objekt und/oder einem Sollkorridor eines anderen Kraftfahrzeugs (5) eine Anpassung des Sollkorridors erfolgt und/oder eine auf den Konflikt hinweisende Konfliktinformation an das insbesondere mit wenigstens einer Person besetzte Kraftfahrzeug (5) übermittelt wird.

8. Verfahren nach einem der vorangehenden Ansprüche,
**dadurch gekennzeichnet,**
**dass** durch die Recheneinrichtung (12) wenigstens eine Lichtsignalanlage (11) und/oder Schranke (10) der Parkumgebung (1) in Abhängigkeit der Sollkorridore angesteuert wird.

9. Verfahren nach einem der vorangehenden Ansprüche,
**dadurch gekennzeichnet,**
**dass** die Sollkorridore im Rahmen eines Pfadplanungsalgorithmus, insbesondere eines A*-Algorithmus, und/oder einer Optimierung für alle in der Parkumgebung (1) betriebenen Kraftfahrzeuge (5) ermittelt werden.

10. Verfahren nach einem der vorangehenden Ansprüche,
**dadurch gekennzeichnet,**
**dass** die Sollkorridore in Wegabschnitte unterteilt sind, wobei für jeden Wegabschnitt ein Zeitfenster zum Durchfahren des Wegabschnitts ausgewählt wird, in dem der Wegabschnitt nicht mit einem Wegabschnitt eines anderen Kraftfahrzeugs (5) konfliktiert.

11. Verfahren nach Anspruch 10,
**dadurch gekennzeichnet,**
**dass** zur Auswahl der Zeitfenster ein Mutex-Verfahren verwendet wird.

12. Verfahren nach einem der vorangehenden Ansprüche,
**dadurch gekennzeichnet,**
**dass** bei einem innerhalb der Parkumgebung (1) auf einem Abstellplatz (3) abzustellenden Kraftfahrzeug (5) ein Zielabstellplatz als Zielort des Sollkorridors in Abhängigkeit der Verkehrslagedaten und der Sollkorridore anderer Kraftfahrzeuge (5) vergeben wird.

13. Verfahren nach Anspruch 12,
**dadurch gekennzeichnet,**
**dass** die Auswahl des Zielabstellplatzes im Hinblick auf einen kurzen Weg und/oder kurze Wartezeiten während des Sollkorridors gewählt wird.

14. Zentrale Recheneinrichtung (12) einer Parkumgebung (1), ausgebildet zur Durchführung eines Verfahrens nach einem der vorangehenden Ansprüche.

## Claims

1. Method for co-ordinating the traffic of motor vehicles (4, 5, 9) in a parking environment (1), wherein a central computing device (12), in particular a server, and sensors (13) which monitor the parking environment (1) and supply sensor data to the central computing device (12), are associated with the parking environment (1), and a map data set of the parking environment (1) is stored on the central computing device (12), wherein the central computing device (12) is designed for spatial and temporal co-ordination of the traffic in the parking environment (1), while current traffic situation data of the parking environment (1) are determined by monitoring and evaluation of at least the sensor data, and for the motor vehicles (5) operated within the parking environment (1), in each case having regard to the traffic situation data, the map data set as well as spatial and temporal target corridors determined for other motor vehicles (5) as input data, predetermines temporal and spatial limits within which specific planning of the route and trajectory of the motor vehicle take place should take place, a target location of the motor vehicle (5) is determined and transmitted to the respective motor vehicle (5), and
**characterised in that** during a planned departure from the parking environment (1) by a vehicle (4) when, in particular due to a high volume of traffic, the time until an exit is reached according to an optimal target corridor exceeds a threshold value, a recommendation to wait to the motor vehicle (4) and/or to a mobile device (15) associated with the motor vehicle (4), by which a request for automatic exit of the vehicle (4) has been transmitted to the central computing device (12), is determined and output there.

2. Method according to claim 1,
**characterised in that**
the motor vehicles (5) within the parking environment (1) are operated at least partially, in particular fully automatically along a trajectory determined in the context of the stipulations of the target corridor.

3. Method according to claim 2,
**characterised in that**
the parking environment (1) has at least one transfer region (8) in which a motor vehicle (4, 5, 9) can be parked for automatic shifting to a parking space (3) and/or can be received after automatic return from a parking space (3) to the transfer region (8).

4. Method according to claim 2 or 3,
**characterised in that**
automatic driving functions within the parking environment (1) can be selected via a mobile device (15) of a driver, in particular a mobile telephone.

5. Method according to one of the preceding claims,
**characterised in that**
in addition to the sensor data for also monitoring at least some of the environmental data transmitted by the motor vehicles (5) operating within the parking environment (1) and/or ego data of the motor vehicles (5) describing the operating state of the respective motor vehicle (5) are taken into consideration.

6. Method according to claim 5,
**characterised in that**
the ego data comprise a current position of the respective motor vehicle (5), determined within the motor vehicle (5) itself, in particular using the map data set transmitted to the motor vehicle (5), which in particular is merged with a position of the motor vehicle (5) determined from the sensor data.

7. Method according to one of the preceding claims,
**characterised in that**
upon detection of a spatial and temporal conflict of the target corridor with an object detected in the context of the monitoring and/or with a target corridor of another motor vehicle (5) an adaptation of the target corridor takes place, and/or conflict information pointing to the conflict is transmitted to the motor vehicle (5) which is in particular occupied by at least one person.

8. Method according to one of the preceding claims,
**characterised in that**
at least one light signal system (11) and/or gate (10) of the parking environment (1) is controlled by the central computing device (12) as a function of the target corridors.

9. Method according to one of the preceding claims,
**characterised in that**
the target corridors are determined within the context of a route planning algorithm, in particular an A* algorithm, and/or within the context of an optimisation for all motor vehicles (5) operating in the parking environment (1).

10. Method according to one of the preceding claims,
**characterised in that**
the target corridors are divided into route sections, wherein for each route section a time window for driving through a route section is selected, in which the route section does not conflict with a route section of another motor vehicle (5).

11. Method according to claim 10,
**characterised in that**
a mutex method is used to select the time windows.

12. Method according to one of the preceding claims,
**characterised in that**
for a motor vehicle (5) to be parked within a parking space (3) in the parking environment (1), a target parking space as target location of the target corridor is assigned as a function of the traffic situation data and the target corridors of other motor vehicles (5).

13. Method according to claim 12,
**characterised in that**
the target parking space is selected based on a short route and/or short waiting times during the target corridor.

14. Central computing device (12) of a parking environment (1), designed to carry out a method according to one of the preceding claims.

## Revendications

1. Procédé de coordination de circulation de véhicules automobiles (4, 5, 9) dans un environnement de stationnement (1), dans lequel sont affectés à l'environnement de stationnement (1) un dispositif de calcul central (12), en particulier un serveur, et des capteurs (13) surveillant l'environnement de stationnement (1) et fournissant des données de capteurs au dispositif de calcul central (12) et un jeu de données cartographiques de l'environnement de stationnement (1) est stocké sur le dispositif de calcul central (12), dans lequel le dispositif de calcul central (12) est formé pour la coordination spatiale et temporelle de la circulation dans l'environnement de stationnement (1) en déterminant par surveillance, en exploitant au moins les données de capteurs, les données de positions de circulation actuelles de l'environnement de stationnement (1) comprenant les positions de véhicules automobiles (5) commandés à l'intérieur de l'environnement de stationnement (1) et l'on détermine respectivement pour les véhicules automobiles (5) commandés dans l'environnement de stationnement (1), en tenant compte des données de positions de circulation, du jeu de données cartographiques ainsi que de couloirs théoriques spatiaux et temporels déterminés pour d'autres véhicules automobiles (5) comme données d'entrée, un couloir théorique temporel et spatial qui alloue des limites temporelles et spatiales au sein desquelles la planification concrète des voies et des trajectoires du véhicule automobile doit se faire, à un lieu de destination du véhicule automobile (5) qui est transmis au véhicule automobile respectif (5), et
**caractérisé en ce que**, lors d'une sortie planifiée de l'environnement de stationnement (1) par un véhicule automobile (4), puis, lorsque, en particulier en raison d'un afflux de circulation élevé, le temps permettant d'atteindre une sortie selon un couloir théorique optimal dépasse une valeur de seuil, une recommandation d'attente est transférée au véhicule automobile (4) et/ou à un appareil mobile (15) affecté au véhicule automobile (4), par laquelle une exigence de sortie automatique du véhicule automobile (4) est transférée au dispositif de calcul central (12) et y est affichée.

2. Procédé selon la revendication 1,
**caractérisé en ce que**
les véhicules automobiles (5) sont commandés à l'intérieur de l'environnement de stationnement (1) au moins en partie, en particulier totalement automatiquement le long d'une trajectoire déterminée dans le cadre de l'affectation du couloir théorique.

3. Procédé selon la revendication 2,
**caractérisé en ce que**
l'environnement de stationnement (1) présente au moins une zone de transfert (8) dans lequel un véhicule automobile (4, 5, 9) peut être remisé pour le faire passer automatiquement à un emplacement de remisage (3) et/ou peut être ramené après renvoi automatique d'un emplacement de remisage (3) à la zone de transfert (8).

4. Procédé selon la revendication 2 ou 3,
**caractérisé en ce que**
des fonctions de conduite automatiques peuvent être sélectionnées à l'intérieur de l'environnement de stationnement (1) via un appareil mobile (15) d'un chauffeur, en particulier via un téléphone mobile.

5. Procédé selon l'une quelconque des revendications précédentes,
**caractérisé en ce que**
des données environnementales transférées à côté des données de capteurs pour surveiller également au moins une partie des véhicules automobiles (5) commandés à l'intérieur de l'environnement de stationnement (1) et/ou des données personnelles des véhicules automobiles (5) décrivant l'état opératoire du véhicule automobile respectif (5) sont prises en compte.

6. Procédé selon la revendication 5,
**caractérisé en ce que**
les données personnelles comprennent une position actuelle du véhicule automobile respectif (5) déterminée dans le véhicule automobile (5) lui-même, en particulier en utilisant le jeu de données cartographiques transmis au véhicule automobile (5), laquelle position est fusionnée avec une position du véhicule automobile (5) déterminée à partir des données de capteurs.

7. Procédé selon l'une quelconque des revendications précédentes,
**caractérisé en ce que**,
lors d'un conflit spatial et temporel détecté du couloir théorique avec un objet détecté dans le cadre de la surveillance et/ou un couloir théorique d'un autre véhicule automobile (5), il se produit une adaptation du couloir théorique et/ou une information de conflit indiquant le conflit est transférée au véhicule automobile (5) en particulier occupé par au moins une personne.

8. Procédé selon l'une quelconque des revendications précédentes,
**caractérisé en ce que**
au moins une installation de signalisation lumineuse (11) et/ou une barrière (10) de l'environnement de stationnement (1) est ou sont commandés par le dispositif de calcul (12) en fonction des couloirs théoriques.

9. Procédé selon l'une quelconque des revendications précédentes,
**caractérisé en ce que**
les couloirs théoriques sont déterminés dans le cadre d'un algorithme de planification de voie, en particulier d'un algorithme A*, et/ou d'une optimisation pour tous les véhicules automobiles (5) commandés dans l'environnement de stationnement (1).

10. Procédé selon l'une quelconque des revendications précédentes,
**caractérisé en ce que**
les couloirs théoriques sont subdivisés en sections de trajets, dans lequel, pour chaque section de trajet, une fenêtre temporelle est sélectionnée pour y faire passer la section de trajet, dans laquelle la section de trajet n'est pas en conflit avec une section de trajet d'un autre véhicule automobile (5).

11. Procédé selon la revendication 10,
**caractérisé en ce que**
un procédé Mutex est utilisé pour sélectionner la fenêtre temporelle.

12. Procédé selon l'une quelconque des revendications précédentes,
**caractérisé en ce que**,
dans le cas d'un véhicule automobile (5) à remiser à l'intérieur de l'environnement de stationnement (1) sur un emplacement de remisage (3), un emplacement de remisage cible est attribué comme lieu de destination du couloir théorique en fonction des données des positions de circulation et des couloirs théoriques d'autres véhicules automobiles (5).

13. Procédé selon la revendication 12,
**caractérisé en ce que**
la sélection de l'emplacement de remisage cible est sélectionnée sur la base d'un trajet court et/ou de courtes périodes d'attente dans le couloir théorique.

14. Dispositif de calcul central (12) d'un environnement de stationnement (1) conçu pour réaliser un procédé selon l'une quelconque des revendications précédentes.
